# EUROPEAN PATENT SPECIFICATION

(11) **EP 2 816 380 B1**
(45) Date of publication and mention of the grant of the patent: **14.08.2019**
(21) Application number: 14153864.5
(22) Date of filing: 04.02.2014
(51) Int. Cl.: G02B 5/23, B32B 17/10, G03C 1/73, C09K 9/00

(54) **Ultra violet enhanced response photochromic composition and device**
Schnell reagierende ultraviolette photochrome Zusammensetzung und Vorrichtung
Composition photochromique et dispositif de réponse améliorée à ultra violet

(30) Priority: 05.02.2013 US 201313759756
(43) Date of publication of application: 24.12.2014
(73) Proprietor: Elbit Systems Ltd., 3100401 Haifa (IS)
(72) Inventor: Gross, Noam, 55527 Kiryat Ono (IL); Donval, Ariela, 48550 Rosh-Haayin (IL); Oron, Moshe, 76404 Rehovot (IL); Nevo, Doron, 43563 Ra'anana (IL)
(74) Representative: Pearl Cohen Zedek Latzer Baratz UK LLP

(56) References cited:
- WO-A1-2012/098511
- US-A1- 2012 064 134
- LINYONG ZHU ET AL: "Light-Controlled Molecular Switches Modulate Nanocrystal Fluorescence", JOURNAL OF THE AMERICAN CHEMICAL SOCIETY, vol. 127, no. 25, 1 June 2005 (2005-06-01) , pages 8968-8970, XP055165526, ISSN: 0002-7863, DOI: 10.1021/ja0423421

## Description

### FIELD OF THE INVENTION

The present invention relates to optical power-limiting devices, and more particularly, to an optical power-limiting passive (self-adaptive) device and to a method for limiting optical power transmission in devices such as lenses and windows, using absorption changes in a novel photochromic composition that exploit the full solar ultraviolet (UV) light spectrum. While a typical photochromic material is activated only by longer UV wavelengths, e.g., 340 to 420 nm, this composition allows the photochromic material to use the shorter UV wavelengths in the solar spectrum as well, e.g. wavelengths shorter than 340 nm, thus enhancing the photochromic response to solar light.

The present invention further relates to, but is not limited to, the production of windows, lenses, contact lenses, microlenses, mirrors and other optical articles. The present invention further relates to protecting dedicated optical elements against sun blinding, flash blinding, flash dazzling, flashing lights originating from explosions in battle fields, welding light, fire related blinding, and lenses for cameras that look directly at the sun or missile launching sites, and other bright emitting sources that contain UV light in their spectrum.

### BACKGROUND OF THE INVENTION

Photochromic materials are known to exhibit a change in light transmission or color in response to actinic radiation in the spectrum of sunlight. Removal of the incident radiation causes these materials to gradually revert back to their original transmissive state.

Photochromic materials have applications such as sunglasses, graphics, ophthalmic lenses, solar control window films, security and authenticity labels, and many others. The use of photochromic materials, however, has been limited for a number of reasons, including due to (a) degradation of the photochromic property of the materials (fatigue) as a result of continued exposure to UV light, particularly to the shorter and more energetic wavelengths (shorter than 340 nm wavelength) and (b) low photochromic reaction where UV radiation is scarce. The current invention addresses these and other issues.

Today, most spectacle lenses are made of a variety of plastics or plastic-glass composites. Most commonly used plastics include PMMA (e.g., PLEXIGLAS® by Arkema France Corp., PERSPEX® by Lucite International, ALTUGLAS® by Arkema France Corp., OPTIX® by Plaskolite, Inc.) and Polycarbonate (e.g., LEXAN® by SABIC Innovative Plastics, MERLON® by Mobay Chemical Company, MAKROLON® by Bayer Aktiengesellschaft Corp., and PANLITE® from Teijin Chemicals Ltd.).

In a scientific article, Linyong Zhu et al describe a hybrid spiropyran-CdSe/ZnS nanocrystal system whose fluorescence intensity can be reversibly modulated using specific bandwidths of light (Journal of the American Chemical Society, vol. 127, no. 25 (2005) pages 8968-8970). The nanocrystals are designed for fluorescence in the visible range, at 523nm, 546nm, and 578nm. A visible light absorbing state of the spiropyran molecules is activated by UV-light within a 260-390 nm range. The spiropyran molecules are used for the reversible quenching of the visible fluorescence emission from the nanocrystals to which they are attached.

WO 2012/098511 relates to optical power-limiting devices using absorption changes in a photochromic composition, having response to infrared light in addition to the conventional response to ultraviolet light. The invention of WO 2012/098511 relies on the combination in a matrix of a photochromic dye with light up-converting nanoparticle additives to provide a photochromic composition that reacts (tints) with or without application of UV or short wave visible light. In this composition, the up-converting nanoparticles absorb low energy photons, e.g., visible light and near-IR light, which is reemitted into the system as UV or short wave visible light. The re-emitted UV light activates the photochromic material in the composition, even if no UV is arriving from an outside source.

### SUMMARY OF INVENTION

Some success in rendering plastic ophthalmic lenses photochromic involved embedding a solid layer of photochromic mineral glass within the bulk of an organic lens material. Examples include, inter alia, U.S. Pat. No. 5,232,637 (Dasher, et al.), that teaches a method of producing a glass-plastic laminated ophthalmic lens structure, and U.S. Pat. No. 4,300,821 (Mignen et al.), that teaches an ophthalmic lens made of organic material having at least one layer of photochromic mineral glass within its mass to impart photochromic properties to the lens.

All known photochromic materials exhibit a change in light transmission or color in response to actinic radiation, mainly due to the longer UV wavelengths (e.g., 340 to 420 nm). One embodiment of the present invention makes use of the harmful shorter wavelengths of the UV light in the spectrum of sunlight by converting those harmful shorter wavelengths of the UV light to the usable UV and short visible wavelengths (340 to 420 nm) via use of fluorescent nano-sized particles.

Fluorescence refers to an optical process in which absorption of a photon is followed by an emission of a different photon with a longer wavelength than the absorbed one. The fluorescence concept is well known and widely used in many applications. However, the use of fluorescence in transparent materials for practical use has been extremely limited. The limitations are largely attributed to the difficulties in preparing small fluorescing nano-crystals (e.g., sub-100 nm, much smaller than the visible light wavelength). The present invention successfully incorporates efficient fluorescence materials in photochromic devices.

One embodiment of this invention relates to an optical power-limiting device comprising a composition for limiting optical power transmission, the device having a first side that receives impinging light and a second side opposed to the first side, the composition comprising photochromic dye molecules and UV fluorescent nanoparticles in a matrix material, the composition being configured to absorb light at wavelengths in the entire solar UV spectrum, including wavelengths of 300-340 nm, the photochromic dye molecules being configured to absorb light having wavelengths between 340 nm and 420 nm, characterized in that a portion of the impinging light having wavelengths shorter than 340 nm is absorbed by the UV fluorescent nanoparticles, the UV fluorescent nanoparticles being configured to convert the light having wavelengths shorter than 340 nm to light having wavelengths between 340 nm and 420 nm.
Another embodiment of this invention makes use of nanoscale particles, e.g., nano-crystals (NC) or quantum dots (QD) that can absorb short wavelength UV radiation and emit it back at a slightly higher wavelength. This fluorescence process can also be referred to as energy or frequency downshifting. The NC/QD should absorb UV radiation at wavelengths that are shorter than those being used by the photochromic material, i.e. a part of the spectrum that is less beneficial to the photochromic molecules (PCM). In fact, the shorter UV wavelengths can be harmful to the PCMs and without the NC/QD they would probably have to be blocked by some kind of a UV absorber. The NC/QD emit the energy back as photons, at the PCM's activation wavelength (e.g., 340 to 420 nm). This process will effectively increase the flux of efficient UV radiation that the PCMs are subjected to, thus enabling a darker tint at activation without affecting the PCM response time. In many applications there is insufficient UV and short wave visible light radiation to actuate the photochromic material. The addition of fluorescent materials enables the in-situ generation of more UV and/or short wave visible light that in turn can actuate photochromic materials and devices.

Examples for NC/QD suited for this application are, e.g., ZnO (Zinc oxide) nanoparticles (see, e.g., Decay Dynamics of ultraviolet photoluminescence in ZnO nanocryctals, S. Yamamoto et al., Journal of Luminescence 126 (2007) 257-262 ; CdS; CdSe; gallium oxide; indium oxide; and other suitable materials.

One embodiment uses a matrix, a photochromic dye and UV fluorescent nanoparticle additives to provide a photochromic composition that reacts (tints) faster and tints stronger than without application of UV fluorescent nanoparticle additives. In this composition, the UV fluorescent nanoparticles absorb low wavelength photons, e.g., lower than 340 nm, which are re-emitted into the system as longer wavelength UV or short visible light, e.g., 340 to 420 nm. The re-emitted UV light in turn activates the photochromic material in the composition.

A further embodiment provides a composition of a matrix, a photochromic dye, UV fluorescent nanoparticle additives and environmental stabilizers.

The matrix in the photochromic compositions can be organic-based, e.g., a polymer film, a polymerizable composition, or a transparent adhesive, or inorganic-based, e.g., mineral glass, sol-gel, and any other window based material, and an inorganic-organic composite.

Specific embodiments utilize various UV fluorescent nanoparticle additives in the photochromic compositions, such as ZnO, ZnS, ZnSe, CdS, CdSe, gallium oxide, indium oxide, tin oxide or their alloys, mixtures and mixed composition particles, and any combination thereof.

Various photochromic materials that can be used in the photochromic compositions include, but are not limited to, organic and inorganic photochromics and mixtures thereof. Organic photochromic dyes can be pyrans, oxazines, fulgides, fulgimides, diarylethenes and mixtures thereof. These may be a single photochromic compound, a mixture of photochromic compounds, a material comprising a photochromic compound, such as a monomeric or polymeric ungelled solution, and a material such as a monomer or polymer to which a photochromic compound is chemically bonded. Inorganic photochromics may include crystallites of silver halides, cadmium halide and/or copper halide, or any combination thereof.

Various fluorescence enhancing materials can be used in the photochromic compositions to enhance fluorescence emission from the UV fluorescent nanoparticle additives nanoparticles, including, for example, ZnO, ZnS, ZnSe, CdS, CdSe, gallium oxide, indium oxide, tin oxide or their alloys, mixtures and mixed composition particles, and any combination thereof.

Various stabilizers that can be used in the photochromic compositions include hindered amine light stabilizer (HALS), UV absorbers, thermal stabilizers, singlet oxygen quenchers, various antioxidants, and any combination thereof.

One aspect of the present invention relates to an optical power-limiting composition for limiting optical power transmission for an entire solar UV spectrum. The composition includes photochromic dye molecules and UV fluorescent nanoparticles in a matrix material. The composition is configured to absorb wavelengths in the entire solar UV spectrum, including wavelengths of 300-340 nm, thereby enhancing photochromic responsiveness of the composition to solar light. The composition includes a first side that receives impinging light and a second side opposed to the first side.

Another aspect of the present invention relates to a composition for limiting optical power transmission for the entire solar UV spectrum. The composition includes a transparent bulk material including nano-sphere capsules embedded therein. The nano-sphere capsules include photochromic dye molecules and UV fluorescent nanoparticles in a matrix. The transparent bulk material includes a first side and a second side opposing the first side.

Various nanoparticles and/or microparticles of the photochromic compositions can be further coated or encapsulated with a coating. According to one aspect of the present invention, the UV fluorescent nanoparticles are encapsulated together with the various nanoparticles and/or microparticles. The coating can serve a number of functions, such as protection of the core composition from oxidation or any form of degradation, blocking out harmful radiation, and changing the chemical nature of the particles (hydrophobic/hydrophilic) and hence the dispersability of the nanoparticles and/or microparticles.

### BRIEF DESCRIPTION OF THE DRAWINGS

The invention will now be described in connection with certain preferred embodiments with reference to the following illustrative figures so that it may be more fully understood. With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention.
FIG. 1 depicts a cross-sectional view of photochromic molecules and UV fluorescent nanoparticle additives in bulk material.
FIG. 2 depicts a cross-sectional view of photochromic molecules and UV fluorescent nanoparticle additives in bulk material with a UV reflecting layer at the back.
FIG. 3 depicts a cross-sectional view of device composed of two layers; a photochromic molecules in bulk layer and a UV fluorescent nanoparticles in bulk layer in front of it.
FIG. 4 depicts a cross-sectional view of device composed of three layers; a photochromic molecules in bulk layer, a UV fluorescent nanoparticles in bulk layer in front of it and a UV reflecting layer at the back.
FIG. 5 depicts a cross-sectional view of a nano-sphere (capsule) containing photochromic molecules and UV fluorescent nanoparticles.
FIG. 6 depicts a cross-sectional view of the photochromic device containing nano-spheres.
FIG. 7 shows a fluorescence spectral graph of (a) ZnO and (b) CdS.

### DETAILED DESCRIPTION OF THE DRAWINGS

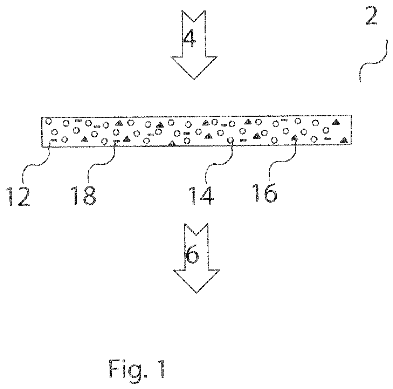

FIG. 1 is a cross-sectional view of photochromic molecules and UV fluorescent nanoparticle additives in bulk material 2, comprising a matrix 12, a photochromic material 14, UV fluorescent nanoparticle additives 16 and environmental stabilizers 18. The optical element absorbs part of a light beam 4 which impinges on it, the short wavelength UV part (e.g., shorter than 340 nm) of the impinging light beam 4 is absorbed in the fluorescent nanoparticle additives 16, converting the short wavelength UV part of the impinging light beam 4 to usable UV and short visible wavelengths (e.g. 340 to 420 nm) thereby making it available to be absorbed in the photochromic material 14. When this light is absorbed by the photochromic material 14, it reversibly changes the color and transparency of the bulk 2 (due to the absorption of light by the photochromic material 14), and effectively transmits only part of the visible light to direction 6. When the power of the entering light 4 is reduced, the transparency is resumed, and the exiting light beam 6 is about as intense as the entering light 4. The material 2 changes the bulk color and transparency when exposed to a wider range (e.g., 300-420 nm wavelength) of light than regular photochromics that react mainly at UV and short visible wavelengths (e.g., 340 to 420) nm of light.

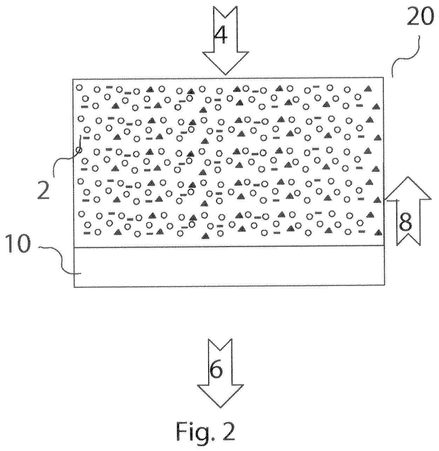

FIG. 2 shows a device 20 in cross-sectional view of photochromic molecules and UV fluorescent nanoparticle additives in bulk material 2 (as described in FIG. 1) with a UV reflecting layer (mirror) 10 at the back. When exposed to impinging light 4, a part of the light at UV and short visible wavelengths (e.g., 300 to 420 nm) is absorbed by the bulk material 2 as discussed above in relation to FIG. 1. The unabsorbed part that reaches the UV reflecting layer (mirror) 10 is back reflected in direction 8 and absorbed by the bulk material 2, thus enhancing the efficiency of the impinging light and making the exiting light 6 include a lesser amount/percentage of UV and short visible wavelengths.

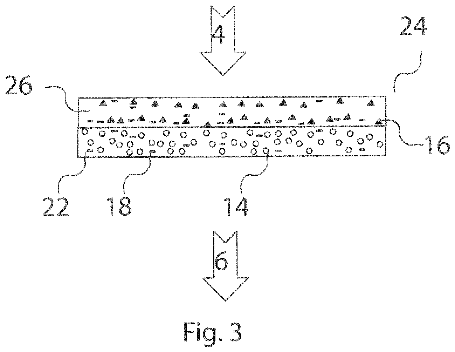

FIG. 3 depicts a cross-sectional view of a device 24 composed of two layers; photochromic molecules 14 and environmental stabilizers 18 in a bulk layer 22 and UV fluorescent nanoparticles 16 and environmental stabilizers 18 in a bulk layer 26 in front of it. The impinging light 4 is first absorbed by the bulk layer 26 that absorbs mainly in the short UV wavelengths (e.g., shorter than 340 nm) and fluoresces in the longer UV and short visible wavelength range (e.g., 340 to 420 nm). The emitted light is absorbed in the layer 22, by the photochromic molecules 14. This layer arrangement enhances the efficiency of the photochromic material since it allows the composition to use the shorter UV wavelengths which are less beneficial to the photochromic molecules.

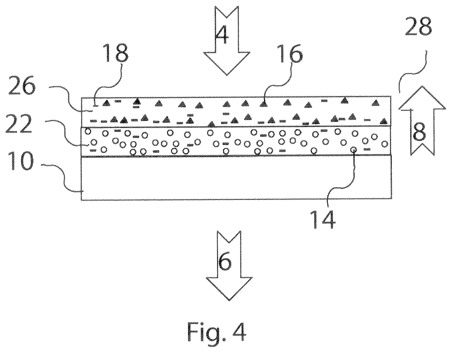

FIG. 4 depicts a cross-sectional view of device 28 composed of three layers; photochromic molecules 14 and environmental stabilizers 18 in bulk layer 22, UV fluorescent nanoparticles 16 and environmental stabilizers 18 in bulk layer 26 in front of it and a UV reflecting layer 10 at the back. When exposed to impinging light 4, part of the light, UV and short visible wavelengths (e.g., 300 to 420 nm) is absorbed in layers 22 and 26. The unabsorbed part that reaches the UV mirror 10 is back-reflected in direction 8 and absorbed by the layers 22 and 26, thus enhancing the efficiency of the impinging light and makes the exiting light 6 poorer in these wavelengths.

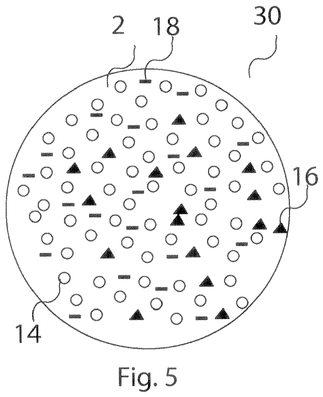

FIG. 5 depicts a cross-sectional view of a nano-sphere (capsule) 30 containing photochromic molecules 14, UV fluorescent nanoparticles 16 and environmental stabilizers 18 in a matrix as described in FIG. 1, but having a matrix in a spherical shape of diameter of, e.g., 50-200 nm. This configuration is very efficient for embedding in bulk that is not favorable to have dispersed nanoparticles in it.

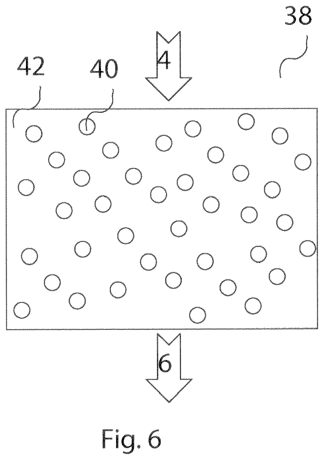

FIG. 6 depicts a cross-sectional view of the photochromic device 38 containing nano-spheres 40 in bulk 42, where matrix of bulk 42 is not favorable to have dispersed nanoparticles in it. In other words, the bulk 42 may be composed of a material that makes it difficult to disperse nanoparticles in it.

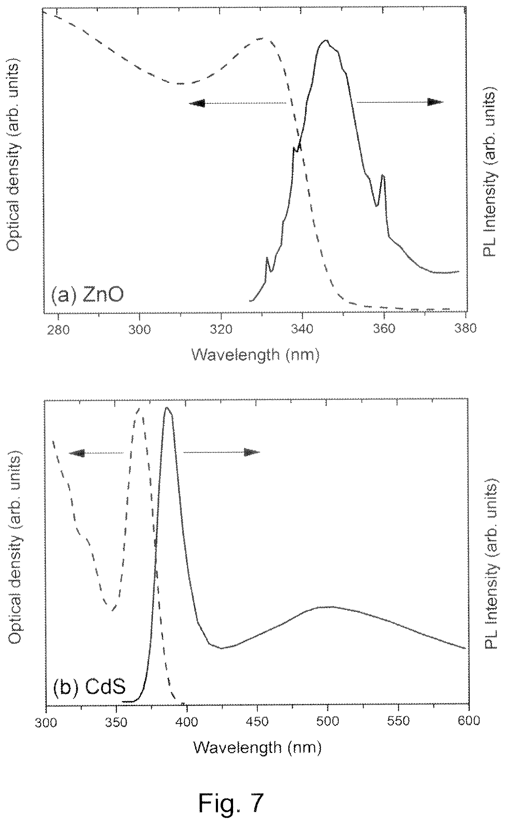

FIG. 7 shows a fluorescence spectral graph of (a) ZnO (from Decay Dynamics of ultraviolet photoluminescence in ZnO nanocryctals, S. Yamamoto et al., Journal of Luminescence 126 (2007) 257-262) and (b) CdS (from Lumidot™ CdS 400, core-type quantum dots, 5mg/mL in toluene, <http://www.sigmaaldrich.com/catalog/product/aldrich/662410?lang=en&region=US>, last accessed February 2, 2013). The dotted line graph is the absorption spectra, named "Optical density" and the solid line graph is the emission spectra named "PL (Photo-Luminescence) intensity. As shown in the graphs, both materials absorb short UV wavelengths and fluoresce at a longer wavelength range.

According to one aspect of the present invention, the embodiments described in FIGs. 1-6 above are configured to change the transparency faster than conventional photochromic devices. In other words, the devices according to the present invention are configured to become less transparent and to return to their original transparency values faster than conventional devices. According to one aspect of the present invention, the embodiments described in FIGs. 1-6 above are configured return to one-half of the initial tint value in between about a few seconds to about 25 seconds, depending on the type of material, at room temperature.

It will be evident to those skilled in the art that the invention is not limited to the details of the foregoing illustrated embodiments and that the present invention may be embodied in other specific forms without departing from the scope of the claims. The present embodiments are therefore to be considered in all respects as illustrative and not restrictive, the scope of the invention being indicated by the appended claims rather than by the foregoing description, and all changes which come within the meaning of the claims are therefore intended to be embraced therein.

## Claims

1. An optical power-limiting device (2, 20) comprising a composition for limiting optical power transmission, the device having a first side that receives impinging light and a second side opposed to the first side, the composition comprising: photochromic dye molecules (14) and UV fluorescent nanoparticles (16) in a matrix material (12), the composition being configured to absorb light at wavelengths in the entire solar UV spectrum, including wavelengths of 300-340 nm, the photochromic dye molecules being configured to absorb light having wavelengths between 340 nm and 420 nm, **characterized in that**:
a portion of the impinging light having wavelengths shorter than 340 nm is absorbed by the UV fluorescent nanoparticles, the UV fluorescent nanoparticles being configured to convert the light having wavelengths shorter than 340 nm to light having wavelengths between 340 nm and 420 nm.

2. The device of claim 1, further comprising environmental stabilizers (18) in the matrix.

3. The device of claim 2, wherein the environmental stabilizers include hindered amine stabilizer (HALS), UV absorbers, thermal stabilizers, singlet oxygen quenchers, various antioxidants, and any combination thereof.

4. The device of claim 1, further comprising a reflective layer (10) for reflection of short UV wavelengths, the reflective layer being coupled to the second side.

5. The device of any preceding claim, further comprising a reflective layer (10) for reflection of short UV wavelengths, the reflective layer being coupled to the second side.

6. The device of claim 1, wherein the photochromic dye molecules include organics, including pyrans, oxazines, fulgides, fulgimides, diarylethenes and any combination thereof, in monomeric or polymeric ungelled solution, or chemically bonded inorganic photochromics including crystallites of silver halides, cadmium halide, copper halide, and any combination thereof.

7. The device of claim 1, wherein the UV fluorescent nanoparticles include nano-crystals or quantum dots of ZnO, ZnS, ZnSe, CdS, CdSe, gallium oxide, indium oxide, tin oxide or their alloys, mixtures and mixed composition particles, and any combination thereof.

8. The device of claim 1, wherein the matrix materials include organic-based materials including polymer film, polymerizable compositions, transparent adhesives, and any combination thereof; or inorganic-based materials including mineral glass, sol-gel, other suitable window-based materials, and any combination thereof; inorganic-organic composites, and any combination of such organic or inorganic-based materials.

9. The device of claim 1, wherein the photochromic dye molecules and the UV fluorescent nanoparticles in the matrix material are shaped into nano-sphere capsules of a spherical shape of diameter of about 50-200 nm, the nano-sphere capsules being embedded in a transparent bulk.

10. The device of claim 9, further comprising stabilizers embedded into the nano-sphere capsules.

11. The device of claim 1, wherein the photochromic dye molecules are coated or encapsulated with a coating, the coating being configured to protect the composition from oxidation or degradation, to block out harmful radiation, to alter chemical nature of the photochromic dye molecules, to alter dispersibility of the photochromic dye molecules, and any combination thereof.

12. The device of claim 1, further configured to absorb and convert to higher wavelength(s) a portion of the impinging light that is in the UV spectrum, wherein the light exiting the composition has wavelength(s) higher than the UV spectrum wavelength.

13. The device of claim 1, comprising: a transparent bulk material including nano-sphere capsules embedded therein, the nano-sphere capsules including photochromic dye molecules and UV fluorescent nanoparticles in a matrix, wherein the transparent bulk material defines the first side and a second side opposing the first side.

14. An optical power-limiting device (24) having a first side that receives impinging light and a second side opposed to the first side, wherein the device comprises alternating layers of matrix material, including at least one layer of photochromic dye molecules (14) in matrix and one layer of fluorescent nanoparticles (16) in matrix, wherein the alternating layers optionally include environmental stabilizers (18), the photochromic dye molecules being configured to absorb light having wavelengths between 340 nm and 420 nm, **characterized in that**:
a portion of the impinging light having wavelengths shorter than 340 nm is absorbed by the UV fluorescent nanoparticles, the UV fluorescent nanoparticles being configured to convert the light having wavelengths shorter than 340 nm to light having wavelengths between 340 nm and 420 nm.

## Patentansprüche

1. Optische Leistungsbegrenzungsvorrichtung (2, 20), umfassend eine Zusammensetzung zum Begrenzen einer optischen Leistungsübertragung,
wobei die Vorrichtung eine erste Seite, die auftreffendes Licht empfängt, und eine zweite Seite, die der ersten Seite gegenüberliegt, aufweist,
wobei die Zusammensetzung umfasst:
photochrome Farbstoffmoleküle (14) und UV-fluoreszierende Nanopartikel (16) in einem Matrixmaterial (12), wobei die Zusammensetzung dazu konfiguriert ist, Licht bei Wellenlängen im gesamten solaren UV-Spektrum, einschließlich Wellenlängen von 300-340 nm, zu absorbieren, wobei die photochromen Farbstoffmoleküle dazu konfiguriert sind, Licht mit Wellenlängen zwischen 340 nm und 420 nm zu absorbieren, **dadurch gekennzeichnet, dass**:
ein Teil des auftreffenden Lichts mit Wellenlängen unter 340 nm von den UV-fluoreszierenden Nanopartikeln absorbiert wird, wobei die UV-fluoreszierenden Nanopartikel dazu konfiguriert sind, das Licht mit Wellenlängen unter 340 nm in Licht mit Wellenlängen zwischen 340 nm und 420 nm umwandeln.

2. Vorrichtung nach Anspruch 1, ferner umfassend Umgebungsstabilisatoren (18) in der Matrix.

3. Vorrichtung nach Anspruch 2, wobei die Umgebungsstabilisatoren einen gehinderten Aminstabilisator (HALS), UV-Absorber, Wärmestabilisatoren, Singulettsauerstoff-Quencher, verschiedene Antioxidationsmittel und eine beliebige Kombination davon beinhalten.

4. Vorrichtung nach Anspruch 1, ferner umfassend eine Reflexionsschicht (10) zur Reflexion kurzer UV-Wellenlängen, wobei die Reflexionsschicht mit der zweiten Seite gekoppelt ist.

5. Vorrichtung nach einem der vorhergehenden Ansprüche, ferner umfassend eine Reflexionsschicht (10) zur Reflexion kurzer UV-Wellenlängen, wobei die Reflexionsschicht mit der zweiten Seite gekoppelt ist.

6. Vorrichtung nach Anspruch 1, wobei die photochromen Farbstoffmoleküle organische Verbindungen beinhalten, einschließlich Pyranen, Oxazinen, Fulgiden, Fulgimiden, Diarylethenen und eine beliebige Kombination davon, in monomerer oder polymerer ungelierter Lösung oder chemisch gebundene anorganische photochrome Stoffe, einschließlich Kristalliten von Silberhalogeniden, Cadmiumhalogenid, Kupferhalogenid und einer beliebigen Kombination davon.

7. Vorrichtung nach Anspruch 1, wobei die UV-fluoreszierenden Nanopartikel Nanokristalle oder Quantenpunkte von ZnO, ZnS, ZnSe, CdS, CdSe, Galliumoxid, Indiumoxid, Zinnoxid oder deren Legierungen, Gemische und Partikel mit gemischter Zusammensetzung und eine beliebige Kombination davon beinhalten.

8. Vorrichtung nach Anspruch 1, wobei die Matrixmaterialien Materialien auf organischer Basis beinhalten, einschließlich Polymerfilm, polymerisierbarer Zusammensetzungen, transparenter Klebstoffe und eine beliebige Kombination davon; oder Materialien auf anorganischer Basis, einschließlich Mineralglas, Sol-Gel, anderer geeigneter Materialien auf Fensterbasis und eine beliebige Kombination davon; anorganisch-organische Verbundstoffe und eine beliebige Kombination solcher Materialien auf organischer oder anorganischer Basis.

9. Vorrichtung nach Anspruch 1, wobei die photochromen Farbstoffmoleküle und die UV-fluoreszierenden Nanopartikel in dem Matrixmaterial zu Nanokugelkapseln mit einer Kugelform mit einem Durchmesser von etwa 50 bis 200 nm geformt sind, wobei die Nanokugelkapseln in eine transparente Masse eingebettet sind.

10. Vorrichtung nach Anspruch 9, ferner umfassend Stabilisatoren, die in die Nanokugelkapseln eingebettet sind.

11. Vorrichtung nach Anspruch 1, wobei die photochromen Farbstoffmoleküle mit einer Beschichtung beschichtet oder verkapselt sind, wobei die Beschichtung dazu konfiguriert ist, die Zusammensetzung vor Oxidation oder Abbau zu schützen, schädliche Strahlung auszublenden, die chemische Natur der photochromen Farbstoffmoleküle zu verändern, die Dispergierbarkeit der photochromen Farbstoffmoleküle zu ändern und eine beliebige Kombination davon.

12. Vorrichtung nach Anspruch 1, ferner dazu konfiguriert, einen Teil des auftreffenden Lichts, das im UV-Spektrum liegt, zu absorbieren und in eine oder mehrere höhere Wellenlänge(n) umzuwandeln, wobei das aus der Zusammensetzung austretende Licht eine oder mehrere Wellenlängen aufweist, die höher als die der UV-Spektrum-Wellenlänge sind.

13. Vorrichtung nach Anspruch 1, umfassend: ein transparentes Massengut mit darin eingebetteten Nanokugelkapseln, wobei die Nanokugelkapseln photochrome Farbstoffmoleküle und UV-fluoreszierende Nanopartikel in einer Matrix beinhalten, wobei das transparente Massengut die erste Seite und eine zweite Seite gegenüber der ersten Seite definiert.

14. Optische Leistungsbegrenzungsvorrichtung (24) mit einer ersten Seite, die auftreffendes Licht empfängt, und einer zweiten Seite, die der ersten Seite gegenüberliegt, wobei die Vorrichtung alternierende Schichten aus Matrixmaterial umfasst, einschließlich mindestens einer Schicht aus photochromen Farbstoffmolekülen (14) in Matrix und eine Schicht fluoreszierender Nanopartikel (16) in Matrix, wobei die alternierenden Schichten gegebenenfalls Umgebungsstabilisatoren (18) enthalten, wobei die photochromen Farbstoffmoleküle dazu konfiguriert sind, Licht mit Wellenlängen zwischen 340 nm und 420 nm zu absorbieren, **dadurch gekennzeichnet, dass**:
ein Teil des auftreffenden Lichts mit Wellenlängen unter 340 nm von den UV-fluoreszierenden Nanopartikeln absorbiert wird, wobei die UV-fluoreszierenden Nanopartikel dazu konfiguriert sind, das Licht mit Wellenlängen unter 340 nm in Licht mit Wellenlängen zwischen 340 nm und 420 nm umwandeln.

## Revendications

1. Dispositif limiteur de puissance optique (2, 20) comprenant une composition pour limiter la transmission de puissance optique, le dispositif ayant un premier côté qui reçoit une lumière incidente et un deuxième côté opposé au premier côté, la composition comprenant :
des molécules de colorant photochromique (14) et des nanoparticules fluorescentes aux UV (16) dans un matériau de matrice (12), la composition étant configurée pour absorber la lumière à des longueurs d'onde dans le spectre solaire UV entier, incluant des longueurs d'onde de 300 à 340 nm, les molécules de colorant photochromique étant configurées pour absorber de la lumière ayant des longueurs d'onde entre 340 nm et 420 nm, **caractérisé en ce que** :
une partie de la lumière incidente ayant des longueurs d'onde plus courtes que 340 nm est absorbée par les nanoparticules fluorescentes aux UV, les nanoparticules fluorescentes aux UV étant configurées pour convertir la lumière ayant des longueurs d'onde plus courtes que 340 nm en lumière ayant des longueurs d'onde entre 340 nm et 420 nm.

2. Dispositif selon la revendication 1, comprenant en outre des stabilisants environnementaux (18) dans la matrice.

3. Dispositif selon la revendication 2, dans lequel les stabilisants environnementaux incluent un stabilisant à aminé encombrée (HALS), des absorbeurs UV, des stabilisants thermiques, des extincteurs d'oxygène singulet, divers antioxydants, et n'importe quelle combinaison de ceux-ci.

4. Dispositif selon la revendication 1, comprenant en outre une couche réfléchissante (10) pour réflexion des courtes longueurs d'onde UV, la couche réfléchissante étant couplée au deuxième côté.

5. Dispositif selon une quelconque revendication précédente, comprenant en outre une couche réfléchissante (10) pour réflexion des courtes longueurs d'onde UV, la couche réfléchissante étant couplée au deuxième côté.

6. Dispositif selon la revendication 1, dans lequel les molécules de colorant photochromique incluent des composés organiques, incluant des pyrannes, des oxazines, des fulgides, des fulgimides, des diaryléthènes et n'importe quelle combinaison de ceux-ci, en solution non gélifiée monomère ou polymère, ou des composés photochromiques inorganiques liés chimiquement incluant des cristallites d'halogénures d'argent, d'halogénure de cadmium, d'halogénure de cuivre, et n'importe quelle combinaison de ceux-ci.

7. Dispositif selon la revendication 1, dans lequel les nanoparticules fluorescentes aux UV incluent des nanocristaux de points quantiques de ZnO, ZnS, ZnSe, CdS, CdSe, oxyde de gallium, oxyde d'indium, oxyde d'étain ou leurs alliages, des mélanges et des particules de composition mélangée, et n'importe quelle combinaison de ceux-ci.

8. Dispositif selon la revendication 1, dans lequel les nanoparticules fluorescentes aux UV incluent des nanocristaux de points quantiques de ZnO, ZnS, ZnSe, CdS, CdSe, oxyde de gallium, oxyde d'indium, oxyde d'étain ou leurs alliages, des mélanges et des particules de composition mélangée, et n'importe quelle combinaison de ceux-ci.

9. Dispositif selon la revendication 1, dans lequel les molécules de colorant photochromique et les nanoparticules fluorescentes aux UV dans le matériau de matrice sont profilées en capsules nanosphériques d'une forme sphérique d'un diamètre d'environ 50 à 200 nm, les capsules nanosphériques étant intégrées dans une masse transparente.

10. Dispositif selon la revendication 9, comprenant en outre des stabilisants intégrés dans les capsules nanosphériques.

11. Dispositif selon la revendication 1, dans lequel les molécules de colorant photochromique sont revêtues ou encapsulées avec un revêtement, le revêtement étant configuré pour protéger la composition d'une oxydation ou d'une dégradation, pour bloquer un rayonnement nocif, pour modifier la nature chimique des molécules de colorant photochromique, pour modifier la dispersibilité des molécules de colorant photochromique, et n'importe quelle combinaison de ceux-ci.

12. Dispositif selon la revendication 1, configuré en outre pour absorber et convertir en longueur(s) d'onde plus élevée(s) une partie de la lumière incidente qui est dans le spectre UV, dans lequel la lumière quittant la composition a une ou des longueur(s) d'onde plus élevée(s) que la longueur d'onde de spectre UV.

13. Dispositif selon la revendication 1, comprenant : un matériau de masse transparente incluant des capsules nanosphériques intégrées en son sein, les capsules nanosphériques incluant des molécules de colorant photochromique et des nanoparticules fluorescentes aux UV dans une matrice, dans lequel le matériau de masse transparente définit le premier côté et un deuxième côté opposé au premier côté.

14. Dispositif limiteur de puissance optique (24) ayant un premier côté qui reçoit de la lumière incidente et un deuxième côté opposé au premier côté, dans lequel le dispositif comprend des couches alternées de matériau de matrice, incluant au moins une couche de molécules de colorant photochromique (14) dans une matrice et une couche de nanoparticules fluorescentes (16) dans une matrice, dans lequel les couches alternées incluent facultativement des stabilisants environnementaux (18), les molécules de colorant photochromique étant configurées pour absorber de la lumière ayant des longueurs d'onde entre 340 nm et 420 nm, **caractérisé en ce que** :
une partie de la lumière incidente ayant des longueurs d'onde plus courtes que 340 nm est absorbée par les nanoparticules fluorescentes aux UV, les nanoparticules fluorescentes aux UV étant configurées pour convertir la lumière ayant des longueurs d'onde plus courtes que 340 nm en lumière ayant des longueurs d'onde entre 340 nm et 420 nm.
